# EUROPEAN PATENT APPLICATION

(11) **EP 4 760 909 A1**
(43) Date of publication of application: **17.06.2026**
(21) Application number: 24889072.5
(22) Date of filing: 04.11.2024
(51) Int. Cl.: H01M 50/207, H01M 50/251, H02J 7/00, H01M 10/42

(54) **BATTERY PACK AND ENERGY STORAGE DEVICE COMPRISING SAME**

(30) Priority: 09.11.2023 KR 20230154703
(71) Applicant: LG Energy Solution, Ltd., Seoul 07335 (KR)
(72) Inventor: PARK, Hye Jin, Daejeon 34122 (KR); JO, Yong Min, Daejeon 34122 (KR); YOON, Sun Woo, Daejeon 34122 (KR)
(74) Representative: Plasseraud IP
(86) International application number: PCT/KR2024/017210
(87) International publication number: WO 2025/100884

(57) **Abstract**

The present disclosure relates to a battery pack, and a battery pack according to one aspect of the present disclosure may include a battery pack housing having a main window that allows infrared rays to pass through; a battery assembly accommodated inside the battery pack housing and composed of at least one battery cell; and a slave controller including a main communication unit capable of receiving infrared rays passing through the main window and configured to control the battery assembly.

## Description

### TECHNICAL FIELD

### CROSS-REFERENCE TO RELATED APPLICATIONS

The present application claims priority to Korean Patent Application No. 10-2023-0154703 filed on November 9, 2023 in the Republic of Korea, the disclosures of which are incorporated herein by reference.

### TECHNICAL FIELD

The present disclosure relates to a battery pack and an energy storage system including the same, and more specifically, to a battery pack that can be controlled by a battery management system (BMS) and an energy storage system including the same.

### BACKGROUND ART

Secondary batteries have been applied to small-sized applications such as mobile devices or laptop computers, but recently, the research direction has been expanded to medium and large-sized applications, and they are widely used in applications requiring high voltage and large capacity in relation to energy storage systems (ESSs) or electric vehicles (EVs).

When multiple battery cells composed of such secondary batteries are integrated and packaged, a battery pack may be formed. This battery pack is a core component of the energy storage system described above and may perform the function of charging and discharging electric energy. In general, the energy storage system is provided with a plurality of battery packs and configured to store and release electric energy with a larger capacity or higher output.

Meanwhile, to manage the state of a plurality of battery packs individually and efficiently, a battery management system (BMS) having a multi-slave system is being introduced. The battery management system may be composed of a slave controller that individually controls battery cells provided in one battery pack and a master controller that manages a plurality of battery packs in an integrated manner by controlling multiple slave controllers.

In order for this battery management system to operate normally, communication between the master controller and the slave controllers and communication between the slave controllers should be made smoothly. However, when the above communication is performed by a wireless communication method, the communication function may not be performed properly due to external noise or weakening of the signal strength by signal divergence.

To resolve this problem, a method using infrared communication may be sought, but there are currently no battery packs or energy storage systems that may communicate stably using infrared rays.

### SUMMARY

### TECHNICAL PROBLEM

The present disclosure is designed to solve the problems of the related art, and therefore the present disclosure is directed to providing a battery pack capable of stably communicating using infrared rays and an energy storage system including the same.

Technical problems of the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a battery pack including a battery pack housing having a main window that allows infrared rays to pass through; a battery assembly accommodated inside the battery pack housing and composed of at least one battery cell; and a slave controller including a main communication unit capable of receiving infrared rays passing through the main window and configured to control the battery assembly.

At this time, the battery pack housing may have a sub-window that faces other neighboring battery packs and allows infrared rays to pass through, and the slave controller may further include a sub-communication unit capable of transmitting or receiving infrared rays through the sub-window.

At this time, the sub-window may be provided in plurality corresponding to the number of the other neighboring battery packs.

At this time, the sub-communication unit may be provided in plurality corresponding to the number of the plurality of sub-windows, and may be disposed adjacent to each of the plurality of sub-windows.

At this time, the plurality of sub-windows may include a first sub-window and a second sub-window respectively provided on both opposite side surfaces of the battery pack housing.

At this time, the first sub-window and the second sub-window may be disposed parallel to each other with the battery assembly therebetween.

At this time, the main window may be disposed to face one side of the battery assembly, and the main communication unit and the sub-communication unit may be disposed on the one side of the battery assembly.

At this time, the first sub-window and the second sub-window may be placed on a path extending in one direction between the main window and the sub-communication unit to connect other neighboring battery packs to each other, and between the first sub-window and the second sub-window, a reflector capable of reflecting infrared rays passing through them toward the sub-communication unit may be provided.

At this time, the sub-communication unit may be provided in plurality, and the reflector may be provided in plurality corresponding to the number of the plurality of sub-communication units and may be capable of reflecting infrared rays to the plurality of sub-communication units, respectively.

At this time, the reflector may be made of a semi-transmissive material that reflects some of the incident infrared rays and allows the remaining portion to pass along the path.

At this time, the slave controller may further include an actuator capable of rotating the reflector.

According to another aspect of the present disclosure, there is provided an energy storage system including a master control module having a master-side transmitter capable of emitting infrared rays; and a battery pack operated under the control of the master control module, wherein the battery pack includes a battery pack housing having a main window that allows infrared rays emitted from the master-side transmitter to pass through; a battery assembly accommodated inside the battery pack housing and composed of at least one battery cell; and a slave controller including a main communication unit capable of receiving infrared rays passing through the main window and configured to control the battery assembly.

At this time, the energy storage system may further include a light transmission module that transmits infrared rays emitted from the master control module to the main window.

At this time, the light transmission module may include a light transmission body in which a light transmission path connecting the master control module and the main window is provided therein; and a reflector provided on the light transmission path to reflect infrared rays so as to allow infrared rays entering the light transmission body to proceed along the light transmission path.

At this time, the light transmission body may include a body portion extending in any one direction; and an extension portion extending from the body portion toward the main window and having an end thereof facing the main window, wherein an opening that allows infrared rays entering the light transmission body to exit may be provided at the end of the extension portion.

At this time, the battery pack may be provided in plurality.

At this time, the light transmission path may be provided in plurality corresponding to the number of the plurality of battery packs, and the master-side transmitter may be provided in plurality and may emit infrared rays to the plurality of light transmission paths, respectively.

At this time, the plurality of master-side transmitters may each be composed of a plurality of light emitting elements.

At this time, the plurality of battery packs may be arranged side by side along any one direction, and the light transmission path may include a central light path extending parallel to the one direction; and a plurality of slave-side light paths branching from the central light path and extending toward the plurality of battery packs, respectively.

At this time, the plurality of slave-side light paths may be disposed to be spaced apart along the one direction, and the reflector may include a plurality of slave-side reflectors, wherein the plurality of slave-side reflectors may be disposed to be spaced apart along the central light path so as to reflect infrared rays to the plurality of slave-side light paths, respectively.

At this time, at least some of the plurality of slave-side reflectors may be made of a semi-transmissive material that reflects some of the incident infrared rays to the slave-side light path and allows the remaining portion to pass through.

### ADVANTAGEOUS EFFECTS

The battery pack and the energy storage system including the same according to one aspect of the present disclosure include the main window through which infrared rays may pass in the battery pack housing, so that controllers of the battery management system provided inside and outside the battery pack may stably communicate using infrared rays.

The battery pack and the energy storage system including the same according to one aspect of the present disclosure include the sub-window through which infrared rays may pass in the battery pack housing, so that controllers of the battery management system provided in each battery pack may stably communicate using infrared rays.

In the battery pack and the energy storage system including the same according to one aspect of the present disclosure, the main communication unit for communication with the control device and the sub-communication unit for communication between battery packs are disposed together on one side of the battery pack housing, so that the space utilization of the battery pack housing may be increased, and thus they may be configured compactly with a simpler structure.

In the battery pack and the energy storage system including the same according to one aspect of the present disclosure, the communication unit is disposed on one side of the battery pack housing, and the reflector that reflects infrared rays coming from the outside toward the communication unit is provided, so that battery packs spaced apart far from each other may communicate stably without delay.

In the battery pack and the energy storage system including the same according to one aspect of the present disclosure, the actuator is configured to rotate the reflector, which may allow one sub-communication unit and the reflector to communicate with multiple battery packs, and thus they may be configured compactly with a simpler structure.

The energy storage system according to one aspect of the present disclosure includes the light transmission module for transmitting an infrared signal, so that infrared communication between the battery control module and the battery pack may be stably performed.

In the energy storage system according to one aspect of the present disclosure, the reflector is disposed in the light transmission path provided in the light transmission body, so that even if a section of the light transmission path is bent or folded, the infrared signal may be stably transmitted.

In the energy storage system according to one aspect of the present disclosure, multiple battery-side light paths branch from the central light path, and the battery pack-side reflectors are respectively disposed at parts where the battery-side light paths branch, which may allow the master control module to communicate with multiple battery packs using one central light path, and thus it may be configured compactly with a simpler structure.

In the energy storage system according to one aspect of the present disclosure, the battery pack-side reflector is made of a semi-transmissive material to infrared rays so that at least a portion of the infrared signal may be transmitted to the battery pack, which is the receiver, and thus it may be configured compactly with a simpler structure.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a top perspective view showing a state in which a battery pack according to the first embodiment of the present disclosure is disposed between other neighboring battery packs. At this time, the other neighboring battery packs are indicated by dotted lines, and configurations seen through by the other neighboring battery packs are indicated by solid lines.
FIG. 2 is a bottom perspective view showing a state in which a battery pack according to the first embodiment of the present disclosure is disposed between other neighboring battery packs. At this time, the other neighboring battery packs are indicated by dotted lines, and configurations seen through by the other neighboring battery packs are indicated by solid lines.
FIG. 3 is a top perspective view showing a battery pack according to the first embodiment of the present disclosure that communicates using infrared rays. At this time, the battery pack housing is indicated by dotted lines, and configurations seen through by the battery pack housing are indicated by solid lines.
FIG. 4 is a vertical cross-sectional view of a battery pack according to the first embodiment of the present disclosure.
FIG. 5 is a top perspective view showing a battery pack according to the second embodiment of the present disclosure.
FIG. 6 is a top perspective view showing a battery pack according to the second embodiment of the present disclosure that communicates using infrared rays. At this time, the battery pack housing is indicated by dotted lines, and configurations seen through by the battery pack housing are indicated by solid lines.
FIG. 7 is a vertical cross-sectional view of a battery pack according to the second embodiment of the present disclosure that communicates with another battery pack on the lower side using infrared rays.
FIG. 8 is a vertical cross-sectional view of a battery pack according to the second embodiment of the present disclosure that communicates with another battery pack on the upper side using infrared rays.
FIG. 9 is a top perspective view showing a battery pack according to the third embodiment of the present disclosure. At this time, the battery pack housing is indicated by dotted lines, and configurations seen through by the battery pack housing are indicated by solid lines.
FIG. 10 is a top perspective view showing a state in which an energy storage system according to the first embodiment of the present disclosure is installed on a support rack. At this time, the support rack is indicated by dotted lines, and configurations seen through by the support rack are indicated by solid lines.
FIG. 11 is a vertical cross-sectional view of an energy storage system according to the first embodiment of the present disclosure.
FIG. 12 is an enlarged view of a portion of FIG. 11.
FIG. 13 is a front view of a master controller.
FIG. 14 is an enlarged view of another portion of FIG. 11.
FIG. 15 is a vertical cross-sectional view of an energy storage system according to the second embodiment of the present disclosure.
FIG. 16 is an enlarged view of a portion of FIG. 15.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

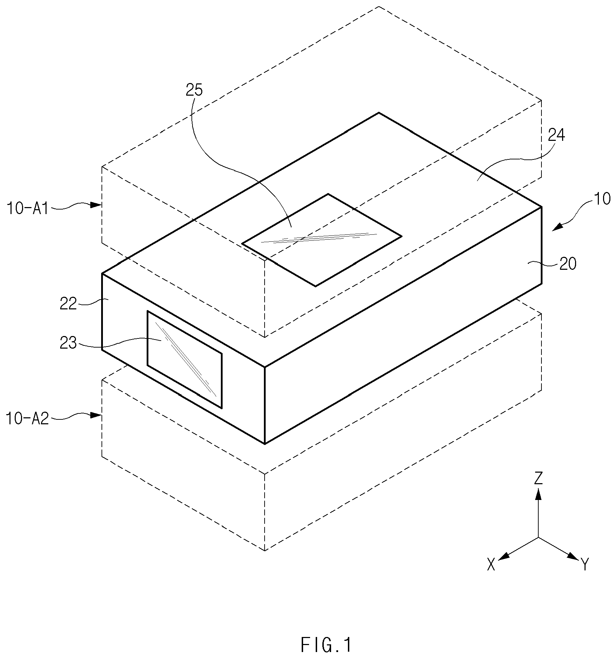

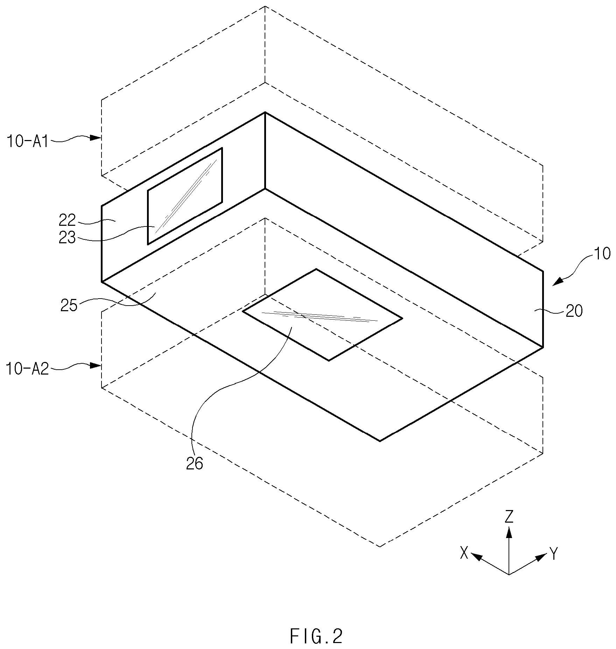

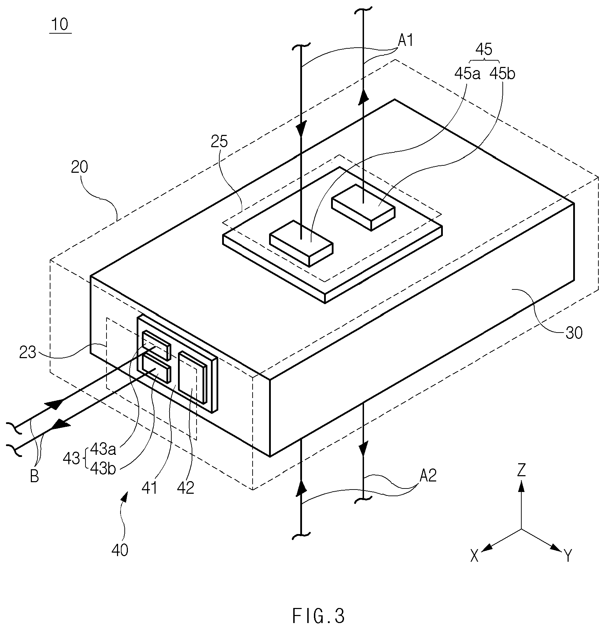

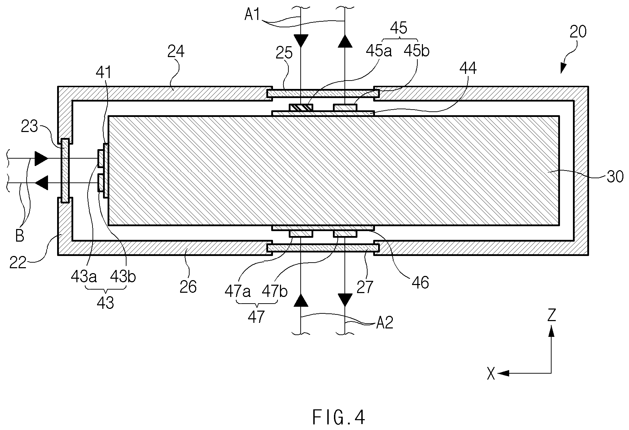

FIG. 1 is a top perspective view showing a state in which a battery pack according to the first embodiment of the present disclosure is disposed between other neighboring battery packs. At this time, the other neighboring battery packs are indicated by dotted lines, and configurations seen through by the other neighboring battery packs are indicated by solid lines. FIG. 2 is a bottom perspective view showing a state in which a battery pack according to the first embodiment of the present disclosure is disposed between other neighboring battery packs. At this time, the other neighboring battery packs are indicated by dotted lines, and configurations seen through by the other neighboring battery packs are indicated by solid lines. FIG. 3 is a top perspective view showing a battery pack according to the first embodiment of the present disclosure that communicates using infrared rays. At this time, the battery pack housing is indicated by dotted lines, and configurations seen through by the battery pack housing are indicated by solid lines. FIG. 4 is a vertical cross-sectional view of a battery pack according to the first embodiment of the present disclosure.

At this time, each component of the battery pack according to the first embodiment of the present disclosure is schematically shown in the drawings, and the size of the component, the thickness of the line, and the like may be somewhat exaggerated for convenience of understanding.

In FIGS. 1 to 4, a battery pack 10 according to the first embodiment of the present disclosure is disclosed. The battery pack 10 according to the first embodiment of the present disclosure is a battery pack capable of communicating with other devices using infrared rays.

At this time, the communication may be a communication for components of a battery management system (BMS) to send and receive predetermined information. For example, the battery pack 10 according to the first embodiment of the present disclosure may be configured to communicate with other neighboring battery packs or a control device for controlling battery packs in an integrated manner.

Referring to FIGS. 1 to 3, the battery pack 10 according to the first embodiment of the present disclosure may include a battery pack housing 20 (hereinafter, referred to as a housing). In this embodiment, the housing 20 is configured to accommodate and protect other components of the battery pack 10.

In this embodiment, the housing 20 is provided as a box-like structure having a hexahedral shape. Through this, when multiple battery packs 10 according to this embodiment are provided, they may be disposed in a regular and high density within a limited space. However, the shape of the battery pack 10 is not particularly limited as long as it may accommodate and protect other components therein.

Meanwhile, in this embodiment, a window for infrared communication may be provided on one surface of the housing 20. As an example, a main window 23 may be provided on a portion of the front surface 22 of the housing 20 as shown. The main window 23 may function as a passage for infrared signals transmitted and received with a control device for controlling the battery pack 10.

To this end, the main window 23 may be made of a material that allows infrared rays to pass through. For example, the main window 23 may be made of calcium fluoride, silicon, magnesium fluoride, germanium, or the like, but is not limited thereto. Accordingly, other components accommodated inside the housing 20 may communicate with the outside via infrared rays through the main window 23.

Meanwhile, in this embodiment, the main window 23 is formed of a rectangular window. However, the shape or size of the main window 23 may be appropriately modified to match the position or shape of a main communication unit 43 to be described later.

At this time, as shown in FIG. 4, an edge portion of the main window 23 may be coupled to the front surface 22 of the housing 20 in a shape-fitting manner. For example, the shape-fitting coupling may be a fitting coupling.

And, although not shown, a sealing member for enhancing the airtightness of the inside of the housing 20 may be provided on the edge side of the main window 23. Such a sealing member may be interposed between the housing 20 and the main window 23.

The battery pack may be required to have a predetermined rating (e.g., IP code) of dustproofing and waterproofing, and in this embodiment, the penetration of dust or moisture into the housing 20 may be prevented by the coupling structure of the housing 20 and the main window 23 and the sealing member described above, while allowing components inside the housing 20 to communicate with an external control device via infrared rays.

Meanwhile, referring to FIGS. 1 to 3 again, a window for infrared communication may be provided on the other surface of the housing 20 in this embodiment. Such a window may include sub-windows 25, 27. Like the main window 23, the sub-windows 25, 27 may be made of a material that allows infrared rays to pass through.

In this embodiment, the sub-windows 25, 27 may be formed of a rectangular window. However, the shape or size of the sub-windows 25, 27 may be appropriately modified to match the position or shape of sub-communication units 45, 47 to be described later.

Meanwhile, in this embodiment, the sub-windows 25, 27 may function as a passage for infrared signals transmitted and received with other neighboring battery packs. To this end, the sub-windows 25, 27 may be provided on a surface of the housing 20 facing the other neighboring battery packs.

More specifically, as shown in FIGS. 1 and 2, the battery pack 10 may be arranged in the vertical direction with other neighboring battery packs 10-A1, 10-A2. For the purpose of description, the other battery pack disposed above the battery pack 10 is referred to as a first external battery pack 10-A1, and the other battery pack disposed below the battery pack 10 is referred to as a second external battery pack 10-A2.

To communicate with such other battery packs using infrared rays, the sub-windows 25, 27 of the battery pack 10 according to this embodiment may include a first sub-window 25 and a second sub-window 27.

In this embodiment, the first sub-window 25 may be provided on an upper surface 24 of the housing 20. Here, the upper surface 24 of the housing 20 may be a surface facing the first external battery pack 10-A1. Accordingly, other components accommodated in the housing 20 may be able to transmit and receive signals to and from the first external battery pack 10-A1 through the first sub-window 25.

And, the second sub-window 27 may be provided on a lower surface 26 opposite to the upper surface 24 of the housing 20. Here, the lower surface 26 of the housing 20 may be a surface facing the second external battery pack 10-A2. Accordingly, other components accommodated in the housing 20 may be able to transmit and receive signals to and from the second external battery pack 10-A2 through the second sub-window 27.

Meanwhile, the first external battery pack 10-A1 and the second external battery pack 10-A2 may be battery packs configured identically to the battery pack 10. In order for the battery packs 10-A1, 10, 10-A2 having the same configuration to communicate with each other while being arranged in a row, the first sub-window 25 and the second sub-window 27 need to be formed symmetrically.

That is, in this embodiment, the first sub-window 25 and the second sub-window 27 may be disposed parallel to each other in the vertical direction (Z-axis direction) with the battery assembly 30 to be described later interposed therebetween.

Accordingly, the first sub-window 25 of the battery pack 10 may be disposed to face the second sub-window of the first external battery pack 10-A1, and the second sub-window 27 of the battery pack 10 may be disposed to face the first sub-window of the second external battery pack 10-A2. Therefore, the battery packs 10-A1, 10, 10-A2 disposed in a vertical line may stably transmit and receive infrared signals.

Meanwhile, as shown in FIG. 4, the edge portion of the first sub-window 25 may be coupled to the upper surface 24 of the housing 20 in a shape-fitting manner, and the edge portion of the second sub-window 27 may be coupled to the lower surface 26 of the housing 20 in a shape-fitting manner. For example, the shape-fitting coupling may be a fitting coupling.

And, although not shown, sealing members for enhancing the airtightness of the housing 20 may be provided on the edge side of the first sub-window 25 and the edge side of the second sub-window 27, respectively. Such sealing members may be interposed between the housing 20 and the sub-windows 25, 27.

Accordingly, dust or moisture may be prevented from penetrating into the housing 20, while allowing other components accommodated in the housing 20 to communicate with other external battery packs via infrared rays.

As such, the housing 20 of the battery pack 10 according to the first embodiment of the present disclosure is provided with a main window 23 and a plurality of sub-windows 25, 27 through which infrared rays may pass, so that other components accommodated in the housing 20 may smoothly communicate with external control devices or other battery packs via infrared rays.

Meanwhile, in this embodiment, as this battery pack 10 and its neighboring battery packs are arranged in the vertical direction, the sub-windows 25, 27 are provided on the upper surface 24 and the lower surface 26 of the housing 20. However, the sub-windows 25, 27 may also be provided on other surfaces of the housing 20 corresponding to the arrangement of this battery pack 10 and its neighboring battery packs.

Again, referring to FIGS. 3 and 4, the battery pack 10 according to the first embodiment of the present disclosure may include the battery assembly 30. The battery assembly 30 may be accommodated and protected in the housing 20.

In this embodiment, the battery assembly 30 may be an assembly in which at least one battery cell is coupled to a frame for supporting the same. At this time, the battery cell may be a pouch-type secondary battery, a prismatic secondary battery, or a cylindrical secondary battery, but the type or structure of the battery cell is not particularly limited.

Accordingly, the battery assembly 30 may be electrically connected to an external power source to charge and store electric energy, or may be electrically connected to an external load to discharge electric energy. That is, the battery assembly 30 may be responsible for the charging and discharging functions of this battery pack 10.

Referring to FIGS. 3 to 5, the battery pack 10 according to the first embodiment of the present disclosure may include a slave controller 40. The slave controller 40 may be configured to control operation of the battery assembly 30.

To this end, the slave controller 40 of the battery pack 10 according to the first embodiment of the present disclosure may include a main substrate portion 41 disposed on one side of the battery assembly 30 and a slave controller 42 mounted on the main substrate portion 41.

As shown, the main substrate portion 41 may be positioned in front of the battery assembly 30, but the relative positions of the main substrate portion 41 and the battery assembly 30 are not particularly limited.

In this embodiment, the slave controller 42 may be electrically connected to the battery assembly 30 by the main substrate portion 41. The slave controller 42 may be configured to control operation of the battery assembly 30.

For example, the slave controller 42 may control or monitor the magnitude and direction of the current flowing through the battery assembly 30, the magnitude of the voltage, the rate or time of charging and discharging, the capacity of the charged electric energy, and the like.

This slave controller 42 may include an electric circuity, a processor, a central processing unit (CPU), a controller, an arithmetic logic unit, an operational logic circuit, a digital signal processing device, a microcomputer, an FPGA, a system on a chip (SoC), a programmable logic unit, a microprocessor, or any device capable of performing the functions described below.

At this time, the slave controller 40 may function as a component of the battery management system. To perform this function, the slave controller 40 may need to communicate with a control device outside the battery pack 10 or neighboring battery packs.

That is, the slave controller 40 of the battery pack 10 according to the first embodiment of the present disclosure may share the magnitude and direction of the current flowing through the battery assembly 30, the magnitude of the voltage, the rate or time of charging and discharging, the capacity of the charged electric energy, and the like with an external control device or other battery packs, and thus may be managed and controlled in an integrated manner by the external control device.

To this end, the slave controller 40 of the battery pack 10 according to the first embodiment of the present disclosure may include a main communication unit 43 capable of communicating with an external control device using an infrared signal. The main communication unit 43 may be configured to communicate with the external control device through the main window 23.

Referring to FIGS. 3 and 4, in this embodiment, the main communication unit 43 may be mounted on the main substrate portion 41. At this time, the main substrate portion 41 may be disposed to face the main window 23 at the front of the battery assembly 30.

Meanwhile, the main communication unit 43 of the battery pack 10 according to the first embodiment of the present disclosure may include a main receiver 43a capable of receiving an infrared signal and a main transmitter 43b capable of transmitting (emitting) an infrared signal. The main transmitter 43b may be formed of a light emitting diode that emits infrared rays, and the main receiver 43a may be formed of an antenna for receiving infrared rays, but is not limited thereto.

In this embodiment, the main receiver 43a may be configured to receive an infrared signal transmitted along the signal path B passing through the main window 23. And, the main transmitter 43b may be configured to transmit an infrared signal along the signal path B passing through the main window 23.

Through this, the slave controller 40 of the battery pack 10 according to this embodiment may stably communicate with an external control device located on the signal path B using infrared rays.

Again, referring to FIGS. 1 to 4, the slave controller 40 of the battery pack 10 according to the first embodiment of the present disclosure may include sub-communication units 45, 47. The sub-communication units 45, 47 may be configured to communicate with other neighboring battery packs using an infrared signal. The sub-communication units 45, 47 may be configured to communicate with other battery packs through the sub-windows 25, 27.

In this embodiment, the sub-communication units 45, 47 may include a first sub-communication unit 45 for communicating with the first external battery pack 10-A1 and a second sub-communication unit 47 for communicating with the second external battery pack 10-A2. At this time, the first sub-communication unit 45 and the second sub-communication unit 47 may be positioned adjacent to the first sub-window 25 and the second sub-window 27, respectively.

More specifically, the slave controller 40 of the battery pack 10 according to this embodiment may include a first sub-substrate portion 44 positioned on the upper side of the battery assembly 30 to face the first sub-window 25. And, the first sub-communication unit 45 described above may be mounted on the first sub-substrate portion 44.

At this time, the first sub-communication unit 45 may include a first sub-transmitter 45a capable of transmitting (emitting) an infrared signal and a first sub-receiver 45b capable of receiving an infrared signal. The first sub-transmitter 45a and the first sub-receiver 45b may be configured similarly to the main transmitter 43b and the main receiver 43a described above, respectively.

In this embodiment, the first sub-transmitter 45a may be configured to receive an infrared signal transmitted along the signal path A1 passing through the first sub-window 25. And, the first sub-receiver 45b may be configured to transmit an infrared signal along the signal path A1 passing through the first sub-window 25. At this time, the signal path A1 may be a path extending upward from this battery pack 10.

Through this, the slave controller 40 of the battery pack 10 according to this embodiment may stably communicate with the first external battery pack 10-A1 located in the signal path A1 using infrared rays.

Likewise, the slave controller 40 of the battery pack 10 according to this embodiment may include a second sub-substrate portion 46 positioned on the lower side of the battery assembly 30 to face the second sub-window 27. And, the second sub-communication unit 47 described above may be mounted on the second sub-substrate portion 46.

At this time, the second sub-communication unit 47 may include a second sub-receiver 47a capable of receiving an infrared signal and a second sub-transmitter 47b capable of transmitting (emitting) an infrared signal. The second sub-transmitter 47b and the second sub-receiver 47a may be configured similarly to the main transmitter 43b and the main receiver 43a described above, respectively.

In this embodiment, the second sub-transmitter 47bmay be configured to receive an infrared signal transmitted along the signal path A2 passing through the second sub-window 27. And, the second sub-receiver 47a may be configured to transmit an infrared signal along the signal path A2 passing through the second sub-window 27. At this time, the signal path A2 may be a path extending downward from this battery pack 10.

Through this, the slave controller 40 of the battery pack 10 according to this embodiment may stably communicate with the second external battery pack 10-A2 located in the signal path A2 using infrared rays.

Meanwhile, although not shown, the slave controller 40 may further include other configurations that perform predetermined functions, such as voltage measurement circuits, temperature sensors, current sensors, and the like, to perform the control function more smoothly.

As such, the battery pack 10 according to the first embodiment of the present disclosure has a window through which infrared rays may pass and a communication unit capable of transmitting and receiving infrared signals, so that it may stably communicate with an external control device or other battery packs using infrared signals.

Hereinafter, battery packs according to other embodiments of the present disclosure will be described with different drawings.

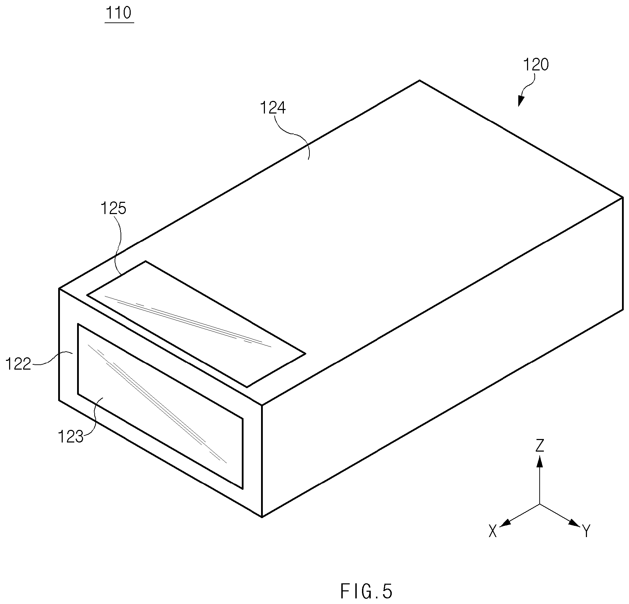

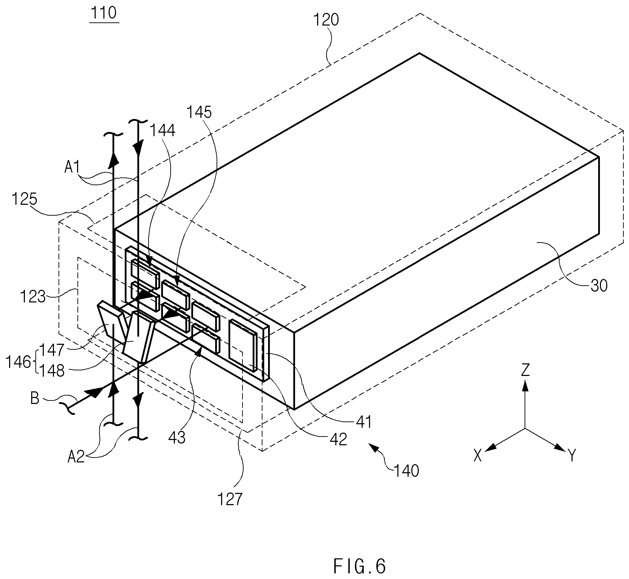

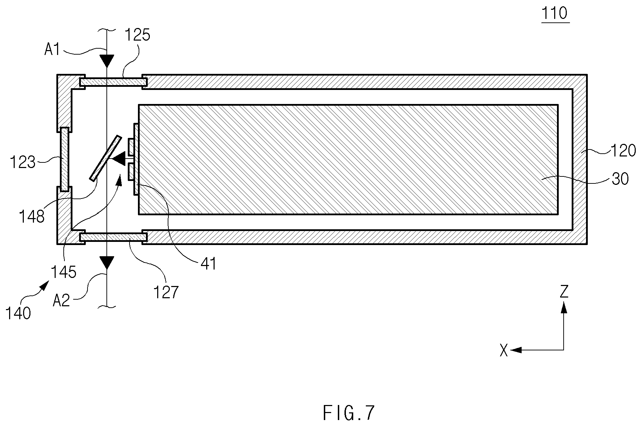

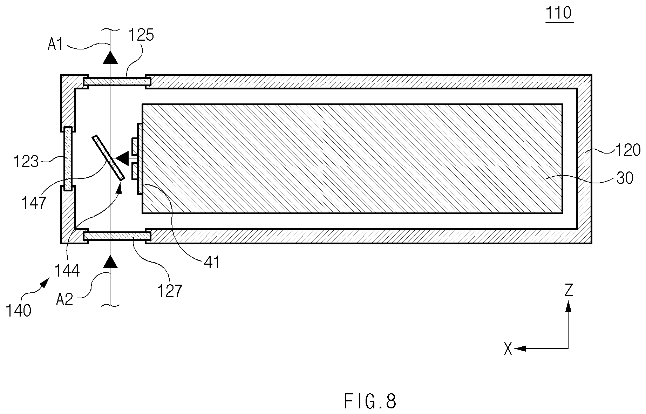

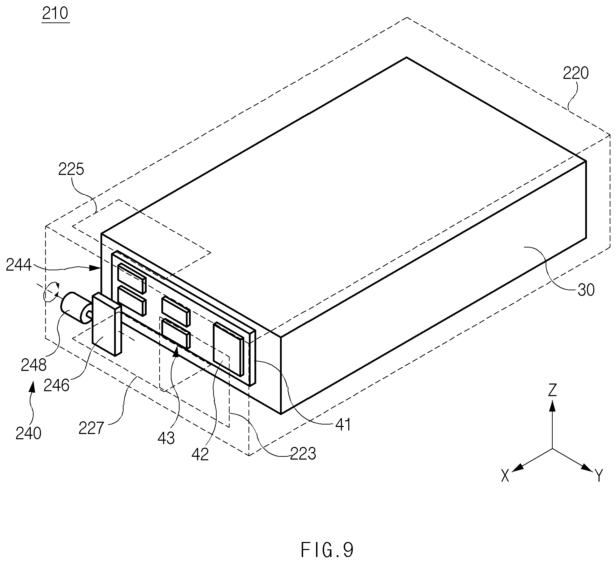

FIG. 5 is a top perspective view showing a battery pack according to the second embodiment of the present disclosure. FIG. 6 is a top perspective view showing a battery pack according to the second embodiment of the present disclosure that communicates using infrared rays. At this time, the battery pack housing is indicated by dotted lines, and configurations seen through by the battery pack housing are indicated by solid lines. FIG. 7 is a vertical cross-sectional view of a battery pack according to the second embodiment of the present disclosure that communicates with another battery pack on the lower side using infrared rays. FIG. 8 is a vertical cross-sectional view of a battery pack according to the second embodiment of the present disclosure that communicates with another battery pack on the upper side using infrared rays. FIG. 9 is a top perspective view showing a battery pack according to the third embodiment of the present disclosure. At this time, the battery pack housing is indicated by dotted lines, and configurations seen through by the battery pack housing are indicated by solid lines.

At this time, each component of the battery pack according to the second and third embodiments of the present disclosure is schematically shown in the drawings, and the size of the component, the thickness of the line, and the like may be somewhat exaggerated for convenience of understanding. And, the same reference numerals as in the drawings shown above refer to the same members performing the same function.

In FIGS. 5 to 8, a battery pack 110 according to the second embodiment of the present disclosure is disclosed. Referring to FIGS. 5 and 6, a main window 123 of the battery pack 110 according to the second embodiment of the present disclosure may be provided on the front surface 122 of a housing 120.

At this time, a first sub-window 125 and a second sub-window 127 may be placed on a light path extending in the vertical direction (Z-axis direction) between the main window 123 and the battery assembly 30. At this time, the light path may be composed of the signal path A1 and the signal path A2 as shown in FIGS. 6 to 8.

In other words, the first sub-window 125 and the second sub-window 127 may be disposed side by side while facing each other in the vertical direction. The arrangement relationship of these sub-windows 125, 127 may be for infrared communication with other battery packs placed above and below the battery pack 110, which will be described in detail later together with a slave controller 140.

Meanwhile, referring to FIGS. 6 to 8, in this embodiment, the main substrate portion 41 of the slave controller 140 may be disposed in front of the battery assembly 30 to face the main window 43. And, the main communication unit 43, a first sub-communication unit 144, and a second sub-communication unit 145 may be mounted together on the main substrate portion 41.

That is, in the battery pack 110 according to the second embodiment of the present disclosure, the main communication unit 43 and sub-communication units 144, 145 may be disposed together at the front of the battery assembly 30.

As such, in this embodiment, since components (communication units) performing the same function are configured to be densely packed in one space, the space utilization inside the housing 20 may be increased, and since the slave controller 140 may be configured more compactly, the energy density of this battery pack 110 may be increased.

On the other hand, in this embodiment, the first sub-communication unit 144, the second sub-communication unit 145, and the main communication unit 43 may be spaced apart along the left-right direction (Y-axis direction). At this time, the order or direction in which each communication unit is disposed is not particularly limited.

At this time, the slave controller 140 of the battery pack 110 according to the second embodiment of the present disclosure may further include a reflector 146. The reflector 146 may be a structure for reflecting an incident infrared signal. As an example, the reflector 146 may be formed of a mirror. However, the structure or type of the reflector 146 is not particularly limited as long as it may reflect the infrared signal.

In this embodiment, the reflector 146 may be configured to reflect an external infrared signal passing through the sub-windows 125, 127 toward the sub-communication units 144, 145, or to reflect an infrared signal emitted from the sub-communication units 144, 145 toward the sub-windows 125, 127.

This reflector 146 may be provided in plurality. In this embodiment, the reflector 146 may include a first reflector 147 that transmits and receives infrared signals to and from the first sub-communication unit 144 and a second reflector 148 that transmits and receives infrared signals to and from the second sub-transmitter 145.

Referring to FIGS. 6 and 8, the first reflector 147 may be positioned in front of the first sub-communication unit 144 between the first sub-window 125 and the second sub-window 127. And, the first reflector 147 may be disposed to be inclined to reflect the infrared signal emitted from the first sub-communication unit 144 toward the first sub-window 125.

Accordingly, the infrared signal emitted from the first sub-communication unit 144 and then reflected by the first reflector 147 may be transmitted along the signal path A1 passing through the first sub-window 125. At this time, the signal path A1 may extend upward from this battery pack 110. In this way, this battery pack 110 may transmit predetermined information to another battery pack located thereabove by emitting an infrared signal from the first sub-communication unit 144.

Additionally, the first reflector 147 may perform the function of transmitting an external infrared signal to the first sub-communication unit 144. More specifically, the external infrared signal that passes through the first sub-window 125 after proceeding along the signal path A1 may be reflected by the first reflector 147 and then incident on the first sub-communication unit 144. In this way, this battery pack 110 may receive predetermined information from another battery pack located thereabove.

As such, the battery pack 110 according to the second embodiment of the present disclosure may have the first sub-window 125, the first sub-communication unit 144, and the first reflector 147 to enable stable infrared communication with another battery pack located thereabove.

And, referring to FIGS. 6 and 7, the second reflector 148 of the battery pack 110 according to the second embodiment of the present disclosure may be positioned in front of the second sub-communication unit 145 between the first sub-window 125 and the second sub-window 127. At this time, the second reflector 148 may be disposed to be inclined to reflect the infrared signal emitted from the second sub-communication unit 145 toward the second sub-window 127.

In this embodiment, the infrared signal emitted from the second sub-communication unit 145 and then reflected by the second reflector 148 may be transmitted along the signal path A2 passing through the second sub-window 127. At this time, the signal path A2 may extend downward from this battery pack 110. In this way, this battery pack 110 may transmit predetermined information to another battery pack located therebelow by emitting an infrared signal from the second sub-communication unit 145.

Additionally, the second reflector 148 may perform the function of transmitting an external infrared signal to the second sub-communication unit 145. More specifically, an external infrared signal that passes through the second sub-window 127 after proceeding along the signal path A2 may be reflected by the second reflector 148 and then incident on the second sub-communication unit 145. In this way, this battery pack 110 may receive predetermined information from another battery pack located therebelow.

As such, the battery pack 110 according to the second embodiment of the present disclosure may have the second sub-window 127, the second sub-communication unit 145, and the second reflector 148 to enable stable infrared communication with another battery pack located therebelow.

Meanwhile, the reflector 146 according to the second embodiment of the present disclosure may be made of a material that is semi-transmissive to infrared rays. In the present disclosure, a material that is semi-transmissive to infrared rays means a material that has a property of reflecting some of the incident infrared rays and allowing the remaining portion to pass through, and has a signal strength enough to perform communication between the reflected infrared rays and the passed infrared rays.

As a result, as shown in FIG. 7, a portion of the infrared signal passing through the first sub-window 125 along the signal path A1 may pass through the second reflector 148 and proceed along the signal path A2. Likewise, as shown in FIG. 8, a portion of the infrared signal passing through the second sub-window 137 along the signal path A2 may pass through the first reflector 147 and proceed along the signal path A1.

As such, the battery pack 110 according to the second embodiment of the present disclosure may emit a portion of the infrared signal received from the outside back to the outside. The above configuration of this battery pack 110 may have an effect of stably transmitting the signal without delay, even if other battery pack(s) is disposed between the battery pack transmitting the infrared signal and the battery pack receiving it.

FIG. 9 discloses a battery pack 210 according to the third embodiment of the present disclosure. In the battery pack 210 according to the third embodiment of the present disclosure, the main window 223 may be positioned in front of the battery assembly 30.

And, in this embodiment, a first sub-window 225 and a second sub-window 227 may be disposed parallel to each other in the vertical direction between the main window 223 and the battery assembly 30.

At this time, the main substrate portion 41 of the slave controller 40 may be provided on the front surface of the battery assembly 30, and the main communication unit 43 and the sub-communication unit 244 may be provided on the main substrate portion 41. In other words, the main communication unit 43 and the sub-communication unit 244 may be disposed together at the front of the battery assembly 30.

Accordingly, the space utilization inside the housing 20 may be increased, while the slave controller 240 may be configured more compactly, thereby increasing the energy density of the battery pack 210.

Referring to FIG. 9 again, in this embodiment, the main communication unit 43 and the sub-communication unit 244 may be arranged to be spaced apart in the Y-axis direction. And, a reflector 246 may be provided in front of the sub-communication unit 244.

In this embodiment, the reflector 246 may be configured to reflect an infrared signal entering a housing 220 through sub-windows 225, 227 toward the sub-communication unit 244, or to reflect an infrared signal emitted from the sub-communication unit 244 toward the sub-windows 225, 227.

At this time, a slave controller 240 of the battery pack 210 according to the third embodiment of the present disclosure may further include an actuator 248. The actuator 248 may be configured to rotate the reflector 246. As an example, the actuator 248 may be a step motor, but is not limited thereto.

In this embodiment, the actuator 248 may rotate the reflector 246 so that one surface of the reflector 246 is inclined toward the first sub-window 225. At this time, one surface of the reflector 246 may be a surface facing the sub-communication unit 244.

Accordingly, an external infrared signal passing through the first sub-window 225 may be reflected toward the sub-communication unit 244, or an infrared signal emitted from the sub-communication unit 244 may be reflected toward the first sub-window 225. This allows this battery pack 210 to communicate with another battery pack thereabove.

Additionally, in this embodiment, the actuator 248 may rotate the reflector 246 so that one surface of the reflector 246 is inclined toward the second sub-window 225. At this time, one surface of the reflector 246 may be a surface facing the sub-communication unit 244.

Accordingly, an external infrared signal passing through the second sub-window 227 may be reflected toward the sub-communication unit 244, or an infrared signal emitted from the sub-communication unit 244 may be reflected toward the second sub-window 227. This allows this battery pack 210 to communicate with another battery pack therebelow.

Additionally, in this embodiment, the actuator 248 may rotate the reflector 246 so that the reflector 246 is disposed in the vertical direction. Therefore, the infrared signal that enters the inside of the housing 220 through the first sub-window 225 or the second sub-window 227 may be emitted back to the outside of the housing 20 without being lost.

Accordingly, the infrared signal that enters the battery pack 210 may be stably transmitted to another battery pack. This function may also be achieved by the reflector 246 being made of a semi-transmissive material to infrared rays, as described in the battery pack according to the second embodiment.

As such, according to the third embodiment of the present disclosure, it is possible to communicate with several other battery packs with one sub-communication unit 244 and reflector 246, so that the slave controller 240 may be configured more compactly, and additionally, the energy density of the battery pack 210 may be higher.

Meanwhile, FIGS. 1 to 9 mainly show components for infrared communication among components of a battery pack according to embodiments of the present disclosure, and the battery pack according to embodiments of the present disclosure may further include other components that are not shown. For example, the battery pack may further include electronic elements for operating the battery pack or a support structure for supporting the electronic elements.

Hereinafter, an energy storage system according to the first embodiment of the present disclosure will be described with different drawings.

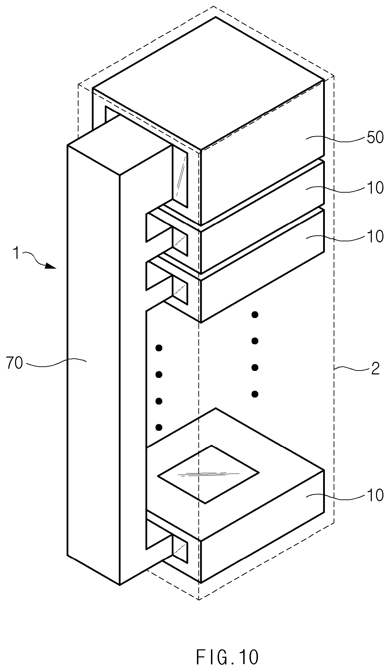

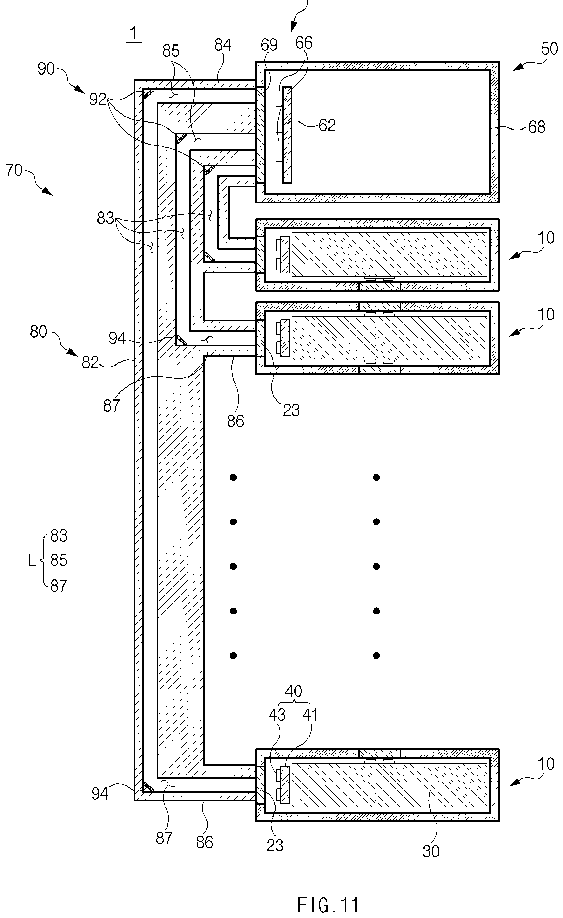

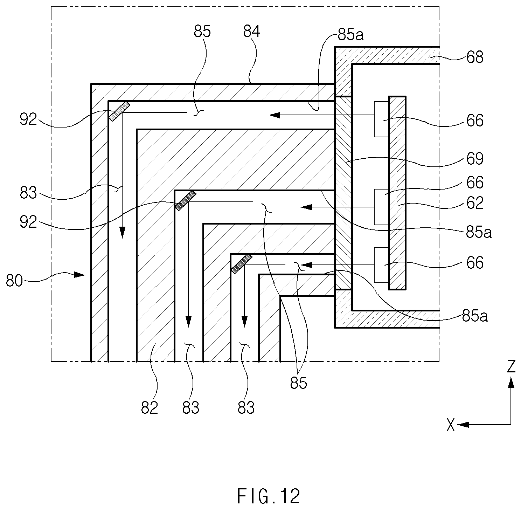

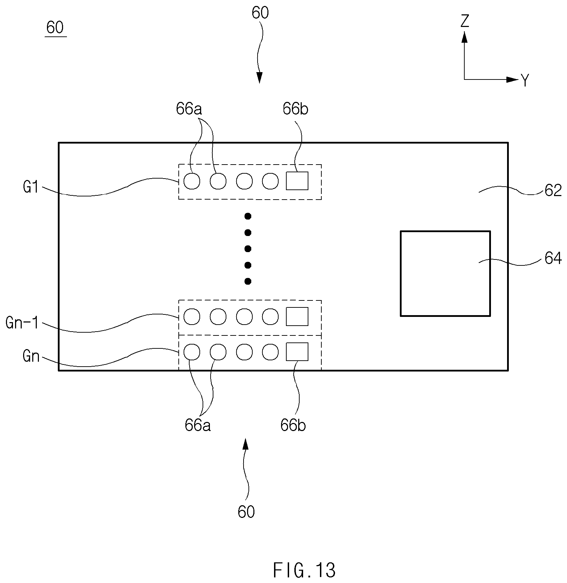

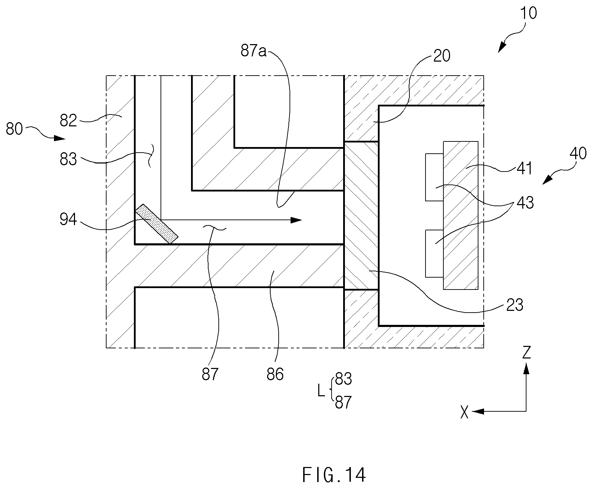

FIG. 10 is a top perspective view showing a state in which an energy storage system according to the first embodiment of the present disclosure is installed on a support rack. At this time, the support rack is indicated by dotted lines, and configurations seen through by the support rack are indicated by solid lines. FIG. 11 is a vertical cross-sectional view of an energy storage system according to the first embodiment of the present disclosure. FIG. 12 is an enlarged view of a portion of FIG. 11. FIG. 13 is a plan view of a master controller. FIG. 14 is an enlarged view of another portion of FIG. 11.

At this time, each component of the energy storage system according to the first embodiment of the present disclosure is schematically shown in the drawings, and the size of the component, the thickness of the line, and the like may be somewhat exaggerated for convenience of understanding.

In FIGS. 10 to 14, an energy storage system 1 according to the first embodiment of the present disclosure is disclosed. The energy storage system 1 according to the first embodiment of the present disclosure is a device capable of storing or releasing a large amount of electric energy. This energy storage system 1 may be placed on a support rack 2 in the form of a shelf or frame and supported.

The energy storage system 1 according to the first embodiment of the present disclosure may include a battery pack 10 having a window through which infrared rays may pass, and a master control module 50 for controlling the operation of the battery pack 10. They may be configured to communicate using infrared signals.

At this time, the battery pack 10 may be the battery pack 10 (shown in FIGS. 1 to 4) according to the first embodiment of the present disclosure described above. Of course, the battery pack 10 may be the battery packs 110, 210 (shown in FIGS. 5 to 9) according to the second or third embodiment. The structure or type of the battery pack 10 of this energy storage system 1 is not particularly limited as long as it is provided with a window for infrared communication.

In this embodiment, the battery pack 10 is provided in plurality. The plurality of battery packs 10 may be arranged in the vertical direction (Z-axis direction). And, the master control module 50 described above may be positioned above the plurality of battery packs 10.

Of course, the arrangement of the plurality of battery packs 10 and the master control module 50 may be modified as necessary. For example, the master control module 50 may be positioned between the plurality of battery packs 10, or the plurality of battery packs 10 and the master control module 50 may be arranged in a grid form.

At this time, the slave controller 40 and the master control module 50 of the battery pack 10 may constitute a battery management system. The master control module 50 may communicate with the slave controller 40 provided in each of the plurality of battery packs 10, receive information about the state of the battery pack 10, and manage and control the battery packs 10 in an integrated manner based on this information. For example, the information may include the capacity of the electric energy stored in the battery pack 10, the voltage or current of the battery pack 10, and the like.

Referring to FIGS. 10 to 13, the master control module 50 of the energy storage system 1 according to the first embodiment of the present disclosure may include a master controller 60 and a control module housing 68 (hereinafter, referred to as a housing) for accommodating the master controller 60.

In this embodiment, the housing 68 may be provided as a box-like structure. However, the shape of the housing 68 is not particularly limited as long as it may accommodate the master controller 60.

Meanwhile, a master-side window 69 may be provided on the front surface of the housing 68. The master-side window 69 may function as a passage for the master controller 60 inside the housing 68 to communicate with other external configurations via infrared rays.

To this end, the master-side window 69 may be made of a material that allows infrared rays to pass through. That is, this master-side window 69 may be made of a material similar to that of the main window 23 (shown in FIGS. 1 to 4) of the battery pack 10 (shown in FIGS. 1 to 4) according to the first embodiment of the present disclosure described above.

Referring to FIGS. 11 to 13, the master controller 60 in this embodiment may include a master-side substrate portion 62, a master control unit 64, and a master-side communication unit 66. The master-side substrate portion 62 may be disposed to face the master-side window 69. And, the master control unit 64 and the master-side communication unit 66 may be mounted on the master-side substrate portion 62.

In this embodiment, the master control unit 64 may be configured to control and manage the battery packs 10 in an integrated manner based on information transmitted from the plurality of battery packs 10 described above.

This master control unit 64 may include an electric circuity, a processor, a central processing unit (CPU), a controller, an arithmetic logic unit, an operational logic circuit, a digital signal processing device, a microcomputer, an FPGA, a system on chip (SoC), a programmable logic unit, a microprocessor, or any device capable of performing the functions described below.

Referring to FIG. 13, the master-side communication unit 66 of the energy storage system 1 according to the first embodiment of the present disclosure may include a master-side transmitter 66a and a master-side receiver 66b.

In this embodiment, the master-side transmitter 66a may be configured to emit an infrared signal to the outside through the master-side window 69, and the master-side receiver 66b may be configured to receive an infrared signal coming from the outside through the master-side window 69.

As an example, the master-side transmitter 66a may be formed of a light emitting element (e.g., a photodiode) that emits infrared rays, and the master-side receiver 66b may be formed of an antenna for receiving infrared rays, but is not limited thereto.

Referring to FIGS. 11 to 13 again, in this embodiment, the master-side communication unit 66 may be configured in plurality corresponding to the number of the plurality of battery packs 10. In FIG. 13, n master-side communication units are shown being divided into groups (G1 to Gn) indicated by dotted lines (n is a natural number). The plurality of master-side communication units 66 may be configured to communicate with the plurality of battery packs 10, respectively.

Meanwhile, as the distance between the master control module 50 and the battery pack 10 increases, the strength of the signal that is emitted from the master control module 50 and then reaches the battery pack 10 may be weaker.

To complement this, the master-side transmitter 66a of the energy storage system 1 according to the first embodiment of the present disclosure may be composed of a plurality of light emitting elements. As shown in FIG. 13, the master-side transmitter 66a may be composed of four light emitting elements arranged in a row.

The number or arrangement of the light emitting elements constituting this master-side transmitter 66a may be appropriately changed considering the distance between the master control module 50 and the battery pack 10, the output of each light emitting element, and the like.

Referring to FIGS. 10 and 11 again, the energy storage system 1 according to the first embodiment of the present disclosure may include a light transmission module 70. The light transmission module 70 may be a module for transmitting an infrared signal transmitted from the master control module 50 to the battery pack 10 or for transmitting an infrared signal transmitted from the battery pack 10 to the master control module 50.

By means of such a light transmission module 70, the master control module 50 may stably communicate with battery packs 10 located relatively far away using an infrared signal.

In this embodiment, the light transmission module 70 may include a light transmission body 80. The light transmission body 80 may be a structure that receives an infrared signal from the master control module 50 or the battery pack 10 and emits the infrared signal to the battery pack 10 or the master control module 50. That is, bidirectional communication between the battery packs 10 and the master control module 50 may be implemented. To this end, a light transmission path L may be provided inside the light transmission body 80.

At this time, the light transmission body 80 may be made of a material that is non-transmissive to infrared rays. In the present disclosure, a material that is non-transmissive to infrared rays may be understood to include not only a material that does not allow all incident infrared rays to pass through, but also a material that allows some of the incident infrared rays to pass through, which is not strong enough to affect communication. For example, the light transmission body 80 may be made of plastic or metal, but is not limited thereto.

Referring to FIGS. 11 to 14, the light transmission body 80 according to an embodiment of the present disclosure may include a body portion 82. The body portion 82 may extend in one direction. At this time, the one direction may be a vertical direction (Z-axis direction) parallel to the direction in which the plurality of battery packs 10 are arranged.

According to this embodiment, the light transmission body 80 may include a master-side extension portion 84. The master-side extension portion 84 may extend from the body portion 82 toward the master-side window 69 of the master control module 50.

An end surface facing the master-side window 69 may be provided at the end of the master-side extension portion 84. At this time, the end surface may have a sufficient height and width to cover the master-side window 69 entirely. Through this, infrared signal transmission between the light transmission body 80 and the master control module 50 may be stably performed.

Referring to FIG. 12, a master-side opening 85a may be provided at the end surface of the master-side extension portion 84. In this embodiment, the master-side opening 85a may function as an inlet through which an infrared signal emitted from the master-side communication unit 66 enters the light transmission body 80 or as an outlet through which an infrared signal transmitted to the master-side communication unit 66 is emitted from the light transmission body 80.

At this time, the master-side opening 85a may be provided in plurality corresponding to the number of the plurality of master-side communication units 66. And, the plurality of master-side openings 85a may be disposed to face the plurality of master-side communication units 66, respectively. The plurality of master-side openings 85a may be connected to a plurality of light transmission paths L to be described later, respectively.

By the above structure, the master-side opening 85a may transmit or receive an infrared signal only with one group of facing master-side communication units 66. Through this, interference or noise caused by the infrared signals overlapping each other between the plurality of master-side communication units 66 may be minimized.

Meanwhile, referring to FIGS. 11 and 14, the light transmission body 80 of the energy storage system 1 according to the first embodiment of the present disclosure may include a battery pack-side extension portion 86. The battery pack-side extension portion 86 may extend from the body portion 82 toward the main window 23 of the battery pack 10.

An end of the battery pack-side extension portion 86 may have an end surface facing the main window 23. At this time, the end surface may have a sufficient height and width to cover the main window 23 entirely. Through this, the infrared signal transmission between the light transmission body 80 and the battery pack 10 may be stably performed.

In this embodiment, the battery pack-side extension portion 86 may be configured in plurality corresponding to the number of the plurality of battery packs 10. And, the plurality of battery pack-side extension portions 86 may extend toward the corresponding plurality of battery packs 10, respectively.

To this end, the plurality of battery pack-side extension portions 86 may be spaced apart along the vertical direction (Z-axis direction) to match the arrangement of the battery packs 10. As such, in this embodiment, the plurality of battery pack-side extension portions 86 are configured to correspond to each battery pack 10, so that signal interference or noise between battery packs 10 may be minimized.

Meanwhile, a battery pack-side opening 87a may be provided at the end surface of the battery pack-side extension portion 86. In this embodiment, the battery pack-side opening 87a may function as an inlet through which an infrared signal emitted from the main communication unit 43 enters the light transmission body 80 or an outlet through which an infrared signal transmitted to the main communication unit 43 is emitted from the light transmission body 80.

As there are a plurality of battery pack-side extension portions 86, the battery pack-side opening 87a may also be provided in each battery pack-side extension portion 86. And, the plurality of battery pack-side openings 87a may be connected to a plurality of light transmission paths L to be described later, respectively.

Referring to FIGS. 11 to 14 again, light transmission paths L may be provided in the light transmission body 80 of the energy storage system 1 according to the first embodiment of the present disclosure. The light transmission path L may be a path through which an infrared signal entering the light transmission body 80 passes. The light transmission path L may be formed of an empty space. Alternatively, it may be filled with a predetermined material that may help transmit an infrared signal.

In this embodiment, the light transmission path L may be configured in plurality corresponding to the number of the plurality of battery packs 10. The plurality of light transmission paths L may each transmit an infrared signal between the corresponding battery packs 10 and the master control module 50. As such, in this embodiment, each battery pack 10 may exclusively use the light transmission path L, so that stable infrared communication may be implemented.

In this embodiment, the light transmission path L may include a central light path 83, a master-side light path 85, and a battery pack-side light path 87. The central light path 83 may be provided inside the body portion 82. And, the central light path 83 may extend long vertically along the extension direction of the body portion 82.

At this time, the vertical length of the central light path 83 may correspond to the vertical distance between the master control module 50 and the battery pack 10. That is, the central light path 83 of the light transmission path L for the battery pack 10 close to the master control module 50 may be relatively short corresponding thereto, and the central light path 83 of the light transmission path L for the battery pack 10 far from the master control module 50 may be relatively long corresponding thereto.

In this embodiment, a master-side light path 85 may be connected to an upper end of the central light path 83. The master-side light path 85 may extend from the upper end of the central light path 83 toward the master-side window 69 of the master control module 50. And, the end of the master-side light path 85 may be connected to the master-side opening 85a described above.

Accordingly, the infrared signal passing through the central light path 83 may be transmitted to the master control module 50. Alternatively, the infrared signal emitted from the master control module 50 may enter the central light path 83.

Referring to FIGS. 11 and 14, a battery pack-side light path 87 may be connected to a lower end of the central light path 83. The battery pack-side light path 87 may extend from the lower end of the central light path 85 toward the main window 23 of the battery pack 10. And, the end of the battery pack-side light path 87 may be connected to the battery pack-side opening 87a described above.

Accordingly, the infrared signal passing through the central light path 83 may be transmitted to the battery pack 10. Additionally, the infrared signal emitted from the battery pack 10 may enter the central light path 83. Furthermore, infrared communication between the battery pack 10 and the master control module 50 may be performed through the light transmission path L.

Meanwhile, as described above, a portion of the light transmission path L may be bent or folded. This may limit the progress of the infrared signal having a straight characteristic along the light transmission path L.

To solve this, the light transmission module 70 of the energy storage system 1 according to the first embodiment of the present disclosure may include a reflector 90. In this embodiment, the reflector 90 may be a structure for reflecting infrared rays. For example, the reflector 90 may be formed of a mirror or the like, but the structure or type of the reflector 90 is not particularly limited as long as it may reflect infrared rays.

At this time, the reflector 90 may be configured in plurality corresponding to the number of light transmission paths L. And, the plurality of reflectors 90 may each control the progress direction of the infrared signal passing through the plurality of light transmission paths L.

Referring to FIGS. 11 and 12, in this embodiment, the reflector 90 may include a master-side reflector 92. The master-side reflector 92 may be positioned at a part where the central light path 83 and the master-side light path 85 are connected.

At this time, the master-side reflector 92 may be disposed to be inclined to reflect the infrared signal passing through the master-side light path 85 toward the central light path 83. Alternatively, the master-side reflector 92 may be disposed to be inclined to reflect the infrared signal passing through the central light path 83 toward the master-side light path 85.

Referring to FIGS. 11 and 14, in this embodiment, the reflector 90 may include a battery pack-side reflector 94. The battery pack-side reflector 94 may be positioned at a part where the central light path 83 and the battery pack-side light path 87 are connected.

At this time, the battery pack-side reflector 94 may be disposed to be inclined to reflect the infrared signal passing through the battery pack-side light path 87 toward the central light path 83. Alternatively, the battery pack-side reflector 94 may be disposed to be inclined to reflect the infrared signal passing through the central light path 83 toward the battery pack-side light path 87.

As such, the light transmission module 70 of the energy storage system 1 according to the first embodiment of the present disclosure is provided with the reflector 90 inside the light transmission body 80, so that the infrared signal may be stably transmitted even if the light transmission path L has a section that is bent or folded.

As described above, in the energy storage system 1 according to the first embodiment of the present disclosure, a window through which infrared rays may pass is provided in the battery pack 10, and the light transmission module 70 that transmits an infrared signal between the master control module 50 and the battery pack 10 is provided, so that communication using infrared rays may be implemented stably. Through this, in this energy storage system 1, the integrated management and control of the battery pack 10 by the battery management system may be performed more smoothly.

Hereinafter, an energy storage system according to the second embodiment of the present disclosure will be described with different drawings.

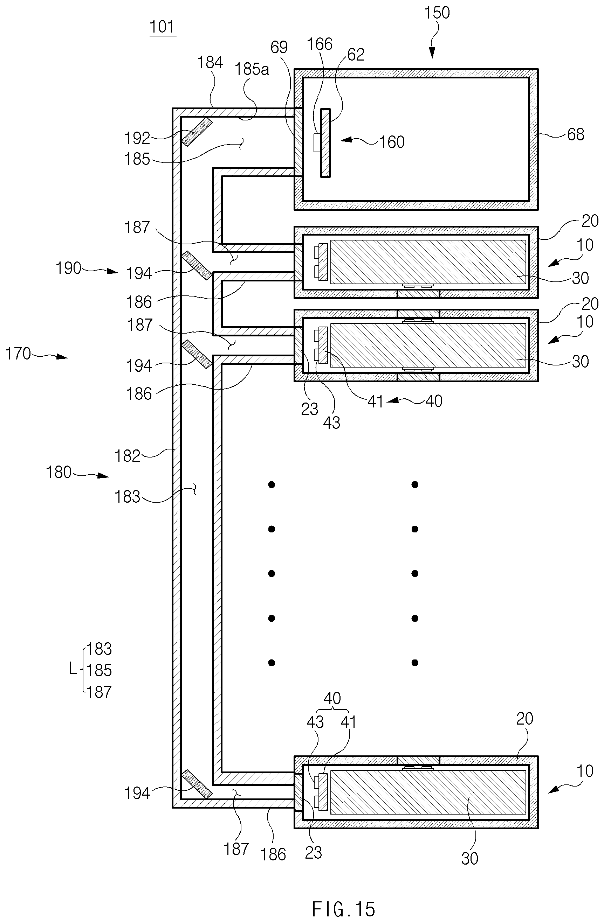

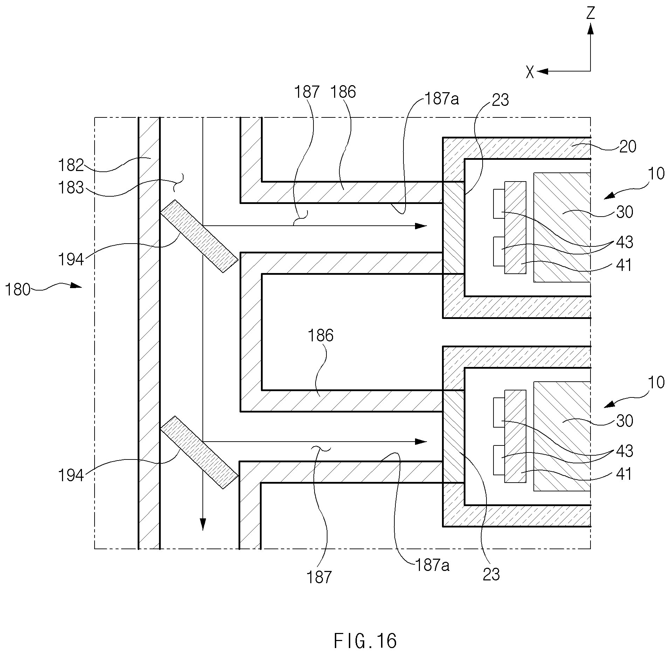

FIG. 15 is a vertical cross-sectional view of an energy storage system according to the second embodiment of the present disclosure. FIG. 16 is an enlarged view of a portion of FIG. 15. At this time, each component of the energy storage system according to the second embodiment of the present disclosure is schematically shown in the drawings, and the size of the component, the thickness of the line, and the like may be somewhat exaggerated for convenience of understanding. And, the same reference numerals as in the drawings shown above refer to the same members performing the same function.

In FIGS. 15 and 16, an energy storage system 101 according to the second embodiment of the present disclosure is disclosed. The energy storage system 101 according to the second embodiment of the present disclosure is a device capable of storing or releasing electric energy by including at least one battery pack 10, and the operation and state of the battery pack 10 may be managed and controlled by a battery management system.

In this embodiment, multiple battery packs 10 are arranged to be spaced apart in the vertical direction. However, the number of battery packs 10 or the form in which the battery packs 10 are arranged may be changed as necessary.

Meanwhile, the energy storage system 101 according to the second embodiment of the present disclosure includes a master control module 150 configured to manage and control the battery packs 10 in an integrated manner.

At this time, the master control module 150 may be a configuration of the battery management system. The master control module 150 may be located on one side of the plurality of battery packs 10 or may be located between the plurality of battery packs 10.

At this time, in this embodiment, a master controller 160 of the master control module 150 may have one master-side communication unit 166 mounted on the substrate portion 62. In this embodiment, one master-side communication unit 166 may be configured to communicate with multiple battery packs 10 via infrared rays. This will be described in detail together with a light transmission module 170 to be described later.

Of course, one master-side communication unit 166 may be configured to emit a strong intensity infrared signal by including a plurality of light emitting elements, such as the master-side communication unit 66 (shown in FIG. 13) of the energy storage system 1 (shown in FIG. 10) according to the first embodiment.

The energy storage system 101 according to the second embodiment of the present disclosure may include a light transmission module 170. In this embodiment, the light transmission module 170 is a module that transmits an infrared signal emitted from the master control module 150 to a battery pack 10 that is a receiver among a plurality of battery packs 10.

Of course, the light transmission module 170 may also transmit an infrared signal emitted from the battery pack 10 to the master control module 150. Through this, bidirectional communication between the battery packs 10 and the master control module 150 may be implemented.

The light transmission module 170 may include a light transmission body 180. The light transmission body 180 is a structure that receives an infrared signal on one side and emits the received infrared signal on the other side. To this end, the light transmission body 180 may be provided with a light transmission path L through which the infrared signal passes.

In this embodiment, the light transmitting body 180 may include a body portion 182. The body portion 182 may extend vertically in parallel with the arrangement direction of the battery packs 10. A central light path 183 may be provided inside the body portion 182.

The central light path 183 may be a portion of the light transmitting path L. This central light path 183 may extend vertically in parallel with the arrangement direction of the battery packs 10.

According to this embodiment, the light transmission body 180 may include a master-side extension portion 184. The master-side extension portion 184 may be provided at an upper end of the body portion 182. The master-side extension portion 184 may extend from the upper end of the body portion 182 toward the master-side window 69 of the master control module 150.

At this time, an end surface facing the master-side window 69 may be provided at the end of the master-side extension portion 184. At this time, the end surface may have a sufficient height and width to cover the master-side window 69 entirely. Through this, leakage of the infrared signal passing through the master-side window 69 to the outside is minimized, and thus stable communication may be achieved.

In this embodiment, one master-side opening 185a may be provided at the end surface of the master-side extension portion 184. The master-side opening 185a may be disposed to face the master-side communication unit 166 described above.

And, a master-side light path 185 may be provided inside the master-side extension portion 184. This master-side light path 185 may be a portion of the light transmission path L.

In this embodiment, the master-side light path 185 may connect an upper portion of the central light path 183 and the master-side opening 185a. To this end, the master-side light path 185 may extend from the central light path 183 toward the master-side window 69 of the master control module 150.

Accordingly, the infrared signal emitted from the master control module 150 may pass through the master-side light path 185 and then enter the central light path 183. Alternatively, the infrared signal traveling along the central light path 183 may pass through the master-side light path 185 and then be transmitted to the master control module 150.

According to this embodiment, the light transmission body 180 may include a battery pack-side extension portion 186. The battery pack-side extension portion 186 may extend from a side of the body portion 182 toward the main window 23 of the battery pack 10.

At this time, as the battery pack 10 is provided in plurality, the battery pack-side extension portion 186 may also be configured in plurality corresponding to the number of battery packs 10. In other words, the plurality of battery pack-side extension portions 186 may each extend toward the main window 23 of the plurality of battery packs 10.

At this time, in this embodiment, an end surface facing the main window 23 may be provided at the end of the battery pack-side extension portion 186. This end surface may have a sufficient height and width to cover the main window 23 entirely. Through this, leakage of the infrared signal passing through the main window 23 to the outside is minimized, and thus stable infrared communication may be achieved.

In this embodiment, a battery pack-side opening 187a may be provided at the end surface of the battery pack-side extension portion 186. The battery pack-side opening 187a may be disposed to face the main communication unit 43 of the battery pack 10.

And, a battery pack-side light path 187 may be provided inside the battery pack-side extension portion 186. This battery pack-side light path 187 may be a portion of the light transmission path L.

At this time, as there are a plurality of battery packs 10, the battery pack-side light path 187 may be configured in plurality corresponding to the number of battery packs 10. And, the plurality of battery pack-side light paths 187 may be disposed to be spaced apart along the arrangement direction of the battery packs 10. Through this, the plurality of battery pack-side light paths 187 may correspond to the plurality of battery packs 10, respectively.

In this embodiment, the battery pack-side light path 187 may connect the central light path 183 and the battery pack-side opening 187a. To this end, the battery pack-side light path 187 may branch from the central light path 183 and extend toward the main window 23 of the battery pack 10.

Accordingly, the infrared signal emitted from the battery pack 10 may pass through the battery pack-side light path 187 and then enter the central light path 183. Alternatively, the infrared signal traveling along the central light path 183 may pass through the battery pack-side light path 187 and then be transmitted to the battery pack 10.

Meanwhile, referring to FIGS. 15 and 16, the light transmission module 170 according to the second embodiment of the present disclosure may include a reflector 190. The reflector 190 may be a reflector for controlling the progress direction of the infrared signal entering the light transmission body so that it may follow the light transmission path L.

The reflector 190 may be formed of a mirror or the like capable of reflecting infrared rays, but the structure or type of the reflector 190 is not particularly limited as long as it may reflect the incident infrared rays.

In this embodiment, the reflector 190 may include a master-side reflector 192. The master-side reflector 192 may be positioned at a part where the central light path 183 and the master-side light path 185 are connected.

At this time, the master-side reflector 192 may be disposed to be inclined to reflect the infrared rays traveling along the central light path 183 toward the master-side light path 185. Accordingly, the infrared signal may smoothly pass through the central light path 183 and the master-side light path 185 that intersect each other.

Referring to FIGS. 15 and 16, in this embodiment, the reflector 190 may include a battery pack-side reflector 194. The battery pack-side reflector 194 is configured to reflect infrared rays passing through the central light path 183 toward the battery pack 10.

At this time, as the battery pack 10 is configured in plurality, the battery pack-side reflector 194 may be configured in plurality corresponding to the number of the plurality of battery packs 10. The plurality of battery pack-side reflectors 194 may be disposed to be spaced apart along the central light path 183 so that they are positioned at each part where the central light path 183 and the battery pack-side light path 187 are connected.

At this time, the battery pack-side reflector 194 may be disposed to be inclined to reflect infrared rays traveling in the central light path 183 to the battery pack-side light path 187. Alternatively, the battery pack-side reflector 194 may be disposed to be inclined to reflect infrared rays traveling in the battery pack-side light path 187 to the central light path 183. Accordingly, the infrared signal may smoothly pass through the central light path 183 and the battery pack-side light path 187 that intersect each other.

Meanwhile, referring to FIG. 16, the plurality of battery pack-side reflectors 194 may be made of a material that is semi-transmissive to infrared rays. When the infrared rays traveling along the central light path 183 are incident on the battery pack-side reflector 194, some of them may be reflected toward the battery pack 10 and the remaining portion may pass through the battery pack-side reflector 194 and continue to travel along the central light path 183.

As a result, at least a portion of the infrared signals emitted from the master control module 150 may be stably transmitted to the battery pack 10 that is a receiver among the plurality of battery packs 10.

As described above, in the energy storage system 101 according to the second embodiment of the present disclosure, the battery pack 10 and the master control module 150 may communicate using a smaller number of master-side communication units 166 and central light paths 183 than the battery packs 10, so that this energy storage system 101 may be configured compactly with a simpler structure.

At this time, the battery pack-side reflector 194 located at the outermost side among the plurality of battery pack-side reflectors 194 may be made of a material that reflects most of the incident infrared signals. This may be because there is no more battery pack 10 to receive signals beyond the battery pack-side reflector 194 located at the outermost side, and thus there is no need to allow the infrared signals to pass through.

Meanwhile, FIGS. 10 to 16 mainly show components for infrared communication among components of an energy storage system according to embodiments of the present disclosure, and the energy storage system according to embodiments of the present disclosure may further include other components for the operation of the energy storage system, although not shown.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1, 101: Energy storage system
10, 110, 210: Battery pack
20, 120, 220: Battery pack housing
30: Battery assembly
40, 140, 240: Slave controller
50: Master control module
60: Master controller
68: Control module housing
70, 170: Light transmission module
80, 180: Light transmission body
90, 190: Reflector
L: Light transmission path

## Claims

1. A battery pack comprising:
a battery pack housing having a main window that allows infrared rays to pass through;
a battery assembly accommodated inside the battery pack housing and composed of at least one battery cell; and
a slave controller comprising a main communication unit capable of receiving infrared rays passing through the main window and configured to control the battery assembly.

2. The battery pack according to claim 1,
wherein the battery pack housing has a sub-window that faces other neighboring battery packs and allows infrared rays to pass through, and
the slave controller further comprises a sub-communication unit capable of transmitting or receiving infrared rays through the sub-window.

3. The battery pack according to claim 2,
wherein the sub-window is provided in plurality corresponding to the number of the other neighboring battery packs.

4. The battery pack according to claim 3,
wherein the sub-communication unit is provided in plurality corresponding to the number of the plurality of sub-windows, and is disposed adjacent to each of the plurality of sub-windows.

5. The battery pack according to claim 3,
wherein the plurality of sub-windows comprise a first sub-window and a second sub-window respectively provided on both opposite side surfaces of the battery pack housing.

6. The battery pack according to claim 5,
wherein the first sub-window and the second sub-window are disposed parallel to each other with the battery assembly therebetween.

7. The battery pack according to claim 5,
wherein the main window is disposed to face one side of the battery assembly, and
the main communication unit and the sub-communication unit are disposed on the one side of the battery assembly.

8. The battery pack according to claim 7,
wherein the first sub-window and the second sub-window are placed on a path extending in one direction between the main window and the sub-communication unit to connect other neighboring battery packs to each other, and
between the first sub-window and the second sub-window, a reflector capable of reflecting infrared rays passing through them toward the sub-communication unit is provided.

9. The battery pack according to claim 8,
wherein the sub-communication unit is provided in plurality, and
the reflector is provided in plurality corresponding to the number of the plurality of sub-communication units and is capable of reflecting infrared rays to the plurality of sub-communication units, respectively.

10. The battery pack according to claim 8,
wherein the reflector is made of a semi-transmissive material that reflects some of the incident infrared rays and allows the remaining portion to pass along the path.

11. The battery pack according to claim 8,
wherein the slave controller further comprises an actuator capable of rotating the reflector.

12. An energy storage system comprising:
a master control module having a master-side transmitter capable of emitting infrared rays; and
a battery pack operated under the control of the master control module,
wherein the battery pack comprises:
a battery pack housing having a main window that allows infrared rays emitted from the master-side transmitter to pass through;
a battery assembly accommodated inside the battery pack housing and composed of at least one battery cell; and
a slave controller comprising a main communication unit capable of receiving infrared rays passing through the main window and configured to control the battery assembly.

13. The energy storage system according to claim 12, further comprising:
a light transmission module that transmits infrared rays emitted from the master control module to the main window.

14. The energy storage system according to claim 13,
wherein the light transmission module comprises:
a light transmission body in which a light transmission path connecting the master control module and the main window is provided therein; and
a reflector provided on the light transmission path to reflect infrared rays so as to allow infrared rays entering the light transmission body to proceed along the light transmission path.

15. The energy storage system according to claim 14,
wherein the light transmission body comprises:
a body portion extending in any one direction; and
an extension portion extending from the body portion toward the main window and having an end thereof facing the main window,
wherein an opening that allows infrared rays entering the light transmission body to exit is provided at the end of the extension portion.

16. The energy storage system according to claim 14,
wherein the battery pack is provided in plurality.

17. The energy storage system according to claim 16,
wherein the light transmission path is provided in plurality corresponding to the number of the plurality of battery packs, and
the master-side transmitter is provided in plurality and emits infrared rays to the plurality of light transmission paths, respectively.

18. The energy storage system according to claim 17,
wherein the plurality of master-side transmitters are each composed of a plurality of light emitting elements.

19. The energy storage system according to claim 16,
wherein the plurality of battery packs are arranged side by side along any one direction, and
the light transmission path comprises:
a central light path extending parallel to the one direction; and
a plurality of slave-side light paths branching from the central light path and extending toward the plurality of battery packs, respectively.

20. The energy storage system according to claim 19,
wherein the plurality of slave-side light paths are disposed to be spaced apart along the one direction, and
the reflector comprises a plurality of slave-side reflectors,
wherein the plurality of slave-side reflectors are disposed to be spaced apart along the central light path so as to reflect infrared rays to the plurality of slave-side light paths, respectively.

21. The energy storage system according to claim 20,
wherein at least some of the plurality of slave-side reflectors are made of a semi-transmissive material that reflects some of the incident infrared rays to the slave-side light path and allows the remaining portion to pass through.
